# FASCICULE DE BREVET EUROPEEN

(11) **EP 0 765 561 B1**
(45) Date de publication et mention de la délivrance du brevet: **25.06.2003**
(21) Numéro de dépôt: 96912083.1
(22) Date de dépôt: 09.04.1996
(51) Int. Cl.: H04M 1/00, H04M 1/72, H04M 11/06, H04M 19/08

(54) **DISPOSITIF DE COMMUNICATION**
KOMMUNIKATIONSGERÄT
COMMUNICATION DEVICE

(30) Priorité: 13.04.1995 FR 9504478
(43) Date de publication de la demande: 02.04.1997
(73) Titulaire: THOMSON multimedia, 92648 Boulogne Cédex (FR)
(72) Inventeur: GUNTZBURGER, Philippe, F-67120 Dachstein (FR); MORAILLON, Jean-Yves, F-67120 Wolwheim (FR); SAMAMA, Charly, F-67200 Strasbourg (FR)
(74) Mandataire: Ruellan-Lemonnier, Brigitte
(86) Numéro de dépôt international: FR9600531
(87) Numéro de publication internationale: WO96032799

(56) Documents cités:
- EP-A- 0 430 137
- EP-A- 0 613 286
- PATENT ABSTRACTS OF JAPAN vol. 19, no. 635 & JP,A,07 023129 (RICOH CO LTD), 24 Janvier 1995,
- TOUTE L'ELECTRONIQUE - N.522, no. 5, Mars 1987, PARIS, FRANCE, pages 83-86, XP002010317

## Description

L'invention a pour objet un dispositif de communication comportant une détection de décrochage de postes téléphoniques, modems ou appareils de communication reliés à une même ligne téléphonique. L'invention s'applique notamment à la détection automatique de l'utilisation d'un poste téléphonique par un modem de transmission de données.

De plus en plus d'appareils utilisent le réseau téléphonique commuté De plus en plus d'appareils utilisent le réseau téléphonique commuté (RTC) en parallèle avec le poste téléphonique classique. Ces appareils mettent en oeuvre un modem connecté à la ligne RTC pour moduler ou démoduler les données à émettre ou à recevoir. Or, il existe maintenant des appareils, tels certains décodeurs de télévision numériques, qui utilisent un modem pour établir une connexion de retour vers le pourvoyeur de programmes. Cette connexion peut être mise en oeuvre à l'insu du téléspectateur, par exemple la nuit.
Le téléspectateur risque donc de trouver la ligne téléphonique occupée lorsqu'il décroche un combiné. Ceci peut être gênant et même dangereux lorsqu'un appel urgent doit être passé.
EP-A-0 613 286 dévoile un dispositif de détection de prise de ligne qui utilise une mesure de tension de ligne.

L'invention a pour objet un dispositif de communication connecté en parallèle avec au moins un appareil de communication sur une ligne téléphonique, ledit dispositif et ledit appareil étant conformes à un gabarit en composantes continues donné,
ledit dispositif étant caractérisé en ce qu'il comprend:
des moyens plaçant le point de fonctionnement en composante continue dudit dispositif seul en dehors des zones dudit gabarit où la composante continue du courant peut être nulle,
des moyens de détermination de la composante continue du courant circulant dans ledit dispositif,
des moyens de détection d'une variation de ladite composante continue de courant.

Etant donné qu'on ne peut contrôler le comportement en composantes continues des autres appareils branchés sur la ligne de transmission, on choisit de manière adéquate le point de fonctionnement du dispositif conforme à l'invention pour pouvoir obtenir une variation détectable de la composante continue du courant dans ledit dispositif lorsqu'un des appareils entre en fonctionnement.
En choisissant le point de fonctionnement du dispositif (lorsqu'il fonctionne seul) en dehors de zones du gabarit où certains appareils pourraient avoir (mais n'ont pas forcément) une composante continue de courant nulle ou faible, une variation du courant dans ledit dispositif est assurée.

Selon un mode de réalisation particulier, lesdits moyens de placement du point de fonctionnement comprennent des moyens de génération d'une caractéristique en composantes continues telle qu'elle possède des intersections avec les caractéristiques de charge possibles de la ligne de transmission situées dans des zones dudit gabarit où la composante continue de courant ne peut être nulle.

L'intersection entre la caractéristique de charge de la ligne et la caractéristique du dispositif donne le point de fonctionnement recherché.

Selon un mode de réalisation particulier, ladite caractéristique en composantes continues comprend un point d'intersection avec la caractéristique de charge de 1400 Ohms, ledit point étant situé au delà de 8,6 V.

Selon un mode de réalisation particulier, ledit gabarit comportant une limite maximale de courant, la caractéristique dudit dispositif comporte une pente maximale dans la zone délimitée par les caractéristiques de charge et ladite limite maximale, ladite caractéristique ayant un point commun avec chaque caractéristique de charge possible.

La caractéristique du dispositif s'étend alors sur toute la zone de fonctionnement possible définie par les différentes caractéristiques de charge, la pente maximale maximisant la variation de courant introduite par exemple lors du décrochage d'un poste téléphonique branché sur la même ligne.

Selon un mode de réalisation particulier, lesdits moyens de détection d'une variation de ladite composante continue comprennent un circuit réalisant la dérivée du signal correspondant à ladite composante continue déterminée.

Selon un mode de réalisation particulier, lesdits moyens de détectio d'une variation de ladite composante continue comprennent des mo ens de comparaison de ladite composante continue déterminée et de la composante continue au point de fonctionnement dudit dispositif seul.

Selon un mode de réalisation particulier, ledit dispositif comprend un pont redresseur de la tension de la ligne intercalé entre la ligne de transmission et un circuit de traitement de signaux audio.

Selon un mode de réalisation particulier, la sortie positive du pont redresseur étant connectée aux collecteurs d'un premier et deuxième transistors montés en amplificateur, ladite sortie positive étant reliée la base du premier transistor à travers une première résistance, ledit amplificateur débite dans une seconde résistance reliée à la sortie neutre dudit pont redresseur.

Selon un mode de réalisation particulier, ledit dispositif comprend en outre une capacité reliant la base du premier transistor à la sortie neutre du pont redresseur.

Selon un mode de réalisation particulier, ledit dispositif comprend en outre en série entre l'entrée de l'amplificateur et la sortie neutre du pont redresseur une troisième résistance, un moyen d'interruption et un premier générateur de tension de référence, ledit moyen d'interruption se fermant lorsque la tension ligne dépasse une valeur donnée.

Selon un mode de réalisation particulier, ledit moyen d'interruption et ladite source de tension comprennent une diode Zener.

Selon un mode de réalisation particulier, lesdits moyens de détermination de la composante continue mesurent la tension aux bornes de la seconde résistance.

Selon un mode de réalisation particulier, lesdits moyens de détermination de la composante continue dérivent une partie du courant en sortie de l'amplificateur de courant vers un circuit de mesure de courant.

Selon un mode de réalisation particulier, la branche de dérivation de courant comprend en série un second générateur de tension de référence et une quatrième résistance.

Selon un mode de réalisation particulier, lesdits moyens de détection réalisent une comparaison entre la valeur de la composante continue mesurée par ledit circuit de mesure de courant et la valeur de la composante continué au point de fonctionnement dudit dispositif.

Selon un mode de réalisation particulier, ladite comparaison est réalisée par rapport à une plage autour de la valeur de la composante continue au point de fonctionnement dudit dispositif.

Selon un mode de réalisation particulier, ledit circuit de détermination comprend un microprocesseur connecté à un convertisseur numérique analogique et à une mémoire dans laquelle est stockée la valeur de la composante continue au point de fonctionnement, ledit convertisseur numérique analogique étant relié aux bornes d'une résistance couplée à la branche de dérivation à travers un opto-coupleur.

L'invention met en oeuvre un circuit détecteur placé en parallèle sur le chemin du signal. Ainsi, une chute de tension pouvant être causée par un détecteur en série est évitée.

D'autres caractéristiques et avantages de l'invention apparaîtront à travers de la description d'un exemple de réalisation particulier non limitatif illustré par les figures parmi lesquelles:
- la figure la est un schéma électrique d'une ligne téléphonique,
- la figure 1b est l'équivalent du schéma de la figure la en composante continue,
- la figure 2 est un graphe du gabarit des caractéristiques d'un poste en courant et en tension en composante continue ainsi que la caractéristique de fonctionnement d'un dispositif conforme au présente exemple de réalisation,
- la figure 3 est un schéma électrique du dispositif conforme au présent exemple de réalisation.

Selon le présent exemple de réalisation, un décodeur de télévision numérique est muni d'un modem et branché sur le réseau RTC de l'abonné auquel sont par ailleurs reliés un certain nombre d'autres postes, qu'il s'agisse de modems, de postes de téléphone classiques ou d'autres appareils. Dans un premier temps, avant de prendre la ligne, le décodeur de télévision vérifie que celle-ci n'est pas occupée. Dans un second temps, pendant une transmission de données, le décodeur de télévision surveille la ligne pour détecter le décrochage d'un combiné. Si un décrochage a lieu, la transmission des données est interrompue et la ligne libérée. Les deux détections peuvent être réalisées grâce au dispositif conforme à l'invention.

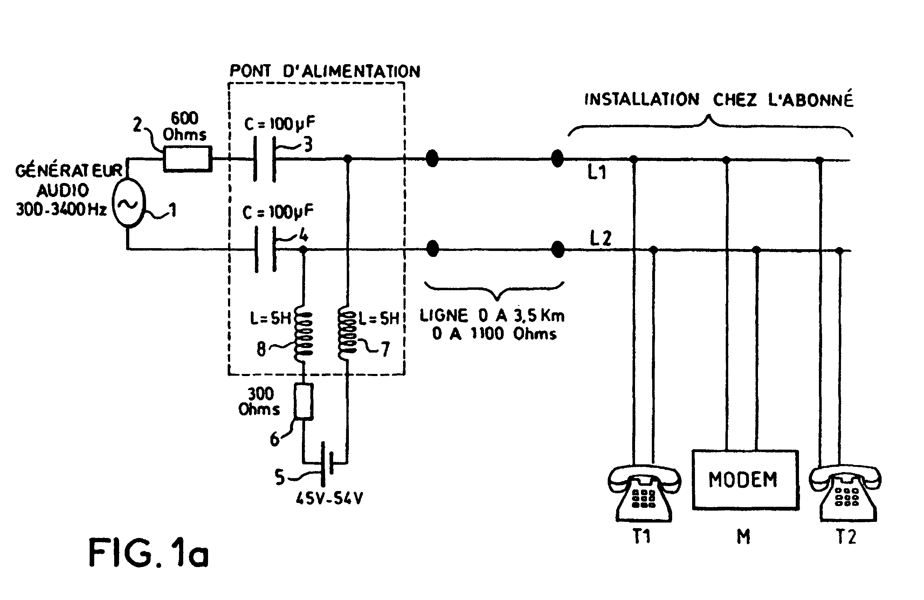

La figure 1a illustre de manière simplifiée la constitution d'une ligne téléphonique du réseau RTC. L'installation comporte un générateur de signaux audio 1 de bande passante de 300 à 3400 Hz. La résistance interne du générateur est symbolisée par une résistance 2 de 600 Ohms placée en série avec le générateur.
La résistance 2 et le générateur 1 sont reliés à la ligne de transmission à double conducteur (L1, L2) de l'abonné à travers deux capacités de découplage continu 3 et 4. En parallèle sur les deux conducteurs vient se placer le pont d'alimentation lui-même: il comprend un générateur de tension 5 en série avec une résistance interne 6, et est relié aux lignes L1 et L2 à travers respectivement une inductance 7 et une inductance 8. La ligne elle-même a une longueur allant de O à 3,5 kilomètres. En tenant compte de la résistance linéaire des conducteurs, ceci équivaut à une résistance située entre 0 et 1100 Ohms. Les différents appareils de l'abonné (téléphones T1 et T2, modem et décodeur M selon le présent exemple), sont connectés en parallèle sur les deux conducteurs.

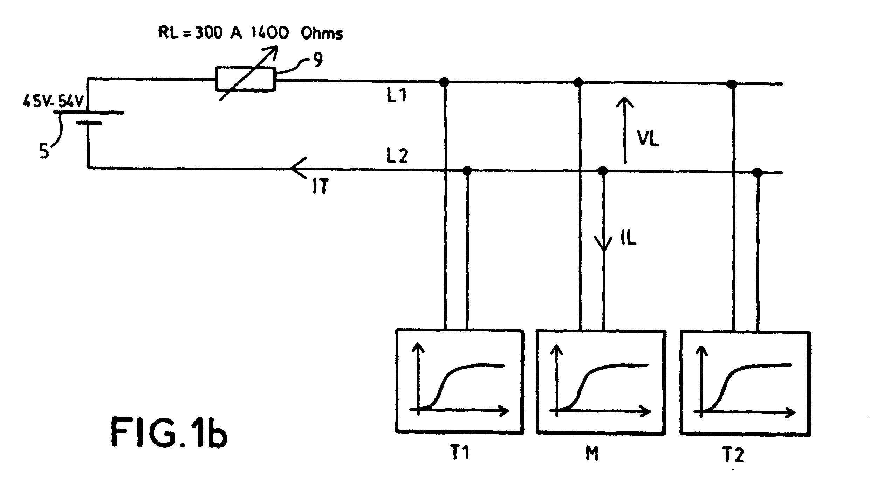

La figure 1b est le schéma équivalent en composante continue. On retrouve le générateur de tension, en série avec une résistance variable 9 de 300 à 1400 Ohms, qui incorpore la résistance interne du générateur ainsi que la résistance de la ligne de transmission. Entre les deux conducteurs L1 et L2, une tension de ligne VL est générée. Cette tension est bien évidemment identique pour tous les appareils branchés sur les conducteurs. Le courant circulant dans la ligne de transmission est référencé IT, tandis que le courant circulant dans le modem M est référencé IL.

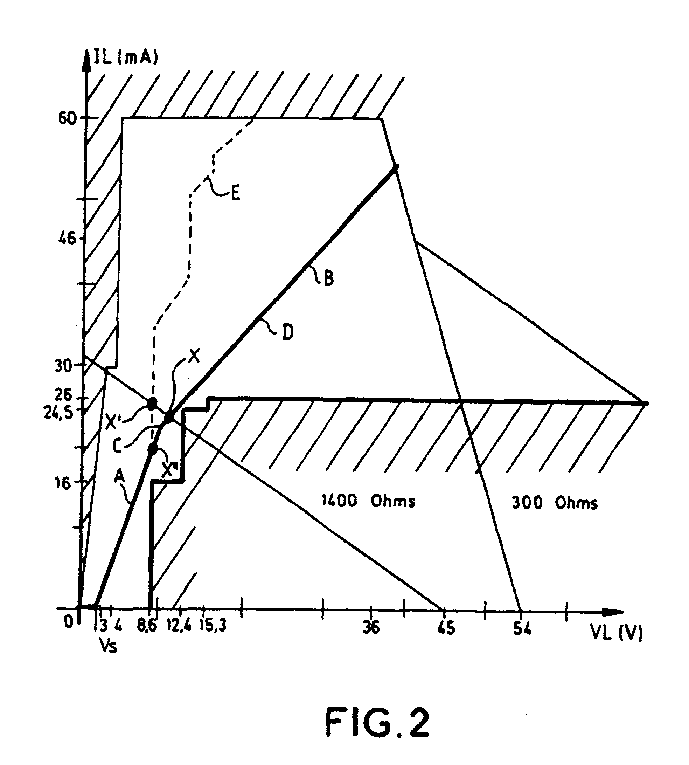

La figure 2 illustre le gabarit imposé des caractéristiques continues d'un appareil branché sur le réseau RTC en France. La tension en volts est donnée en abscisse, tandis que l'intensité est donnée en milliampères en ordonnée. Les parties hachurées correspondent aux points de fonctionnement non autorisés. Le tableau 1 donne les coordonnées (couples abscisse-ordonnée) des deux lignes brisées délimitant la zone de fonctionnement autorisée. Cette zone est d'autre part limitée par les deux droites de charge libellées respectivement 300 Ohms et 1400 Ohms.

**Tableau 1**

| Limité supérieure | Limité inférieure |
|---|---|
| (0;0) | (0;0) |
| (3;30) | (8,6;0) |
| (4;30) | (8,6;16) |
| (4;60) | (12,4;16) |
| (>4;60) | (12,4;24,5) |
| | (15.3;24.5) |
| | (15,3;26) |
| | (>15,3;26) |

La détection d'un appareil est réalisée en surveillant l'intensité de la composante continue du courant circulant dans le modem. On cherche donc à obtenir une variation d'intensité facilement détectable lorsqu'un autre appareil branché sur la ligne de transmission est décroché. Etant donné que l'on ne peut agir sur ces autres appareils, c'est la caractéristique de fonctionnement de l'appareil détecteur, en l'occurrence le modem, qui est choisie de manière appropriée.

Dans le cadre du présent exemple, c'est la caractéristique formée par la limite inférieure du gabarit de la figure 2 qui sera utilisée comme caractéristique d'un téléphone dont on cherche à détecter le décrochement. En effet, cette caractéristique présente une plage d'intensité de courant nulle entre 0 et 8,6 V.
La courbe D en gras de la figure 2 représente la caractéristique courant et tension continus du dispositif conforme au présent exemple, tandis que la courbe E en pointillé représente la somme de la caractéristique D et de la caractéristique du téléphone.
Supposons que le point de fonctionnement du modem seul se situe au point X, intersection entre la droite de charge de 1400 Ohm et la caractéristique du modem. On prend ici l'exemple de la droite de charge de 1400 Ohm parce que c'est l'exemple prenant en compte les plus mauvaises conditions. Le même raisonnement s'applique pour une quelconque autre droite de charge. Lorsque le téléphone est décroché, le point de fonctionnement de l'ensemble téléphone-modem va rester sur la même droite de charge en se déplaçant au point X'. Du point de vue du modem, le point de fonctionnement deviendra X", situé sur la caractéristique du modem et à la verticale de X', étant donné que la tension est la même aux bornes du modem et du téléphone.
Prenons le cas où X est situé à l'intérieur de la plage d'intensité nulle de la caractéristique du téléphone (ceci n'est pas possible avec la caractéristique du modem illustrée). En cas de décrochement du téléphone, X, X' et X" sont confondus car la caractéristique du modem et la caractéristique de l'ensemble modem-téléphone sont confondues. Aucune détection n'est alors possible, car aucune variation de courant ou de tension ne se ressent au niveau du modem.
II faut donc que le point de fonctionnement X soit situé en dehors de la plage d'intensité nulle, à savoir au-delà de 8,6 V dans le présent exemple.

Le gabarit limite la composante continue de courant à 60 mA, ce qui impose un coude dans la caractéristique du modem. Pour maximiser les variations de courant introduites par le décrochage du téléphone, on choisit un coude peu accentué et donc une pente telle que la caractéristique du modem rejoint la droite de charge de 300 Ohms dans les environs de 60mA d'intensité de courant. Etant donné que c'est la variation de courant entre le point de fonctionnement du modem avant décrochage du téléphone et le point de fonctionnement du modemaprès décrochage du téléphone qui est détectée, une pente raide de la caractéristique accentue la variation de courant continu à l'intérieur du modem.

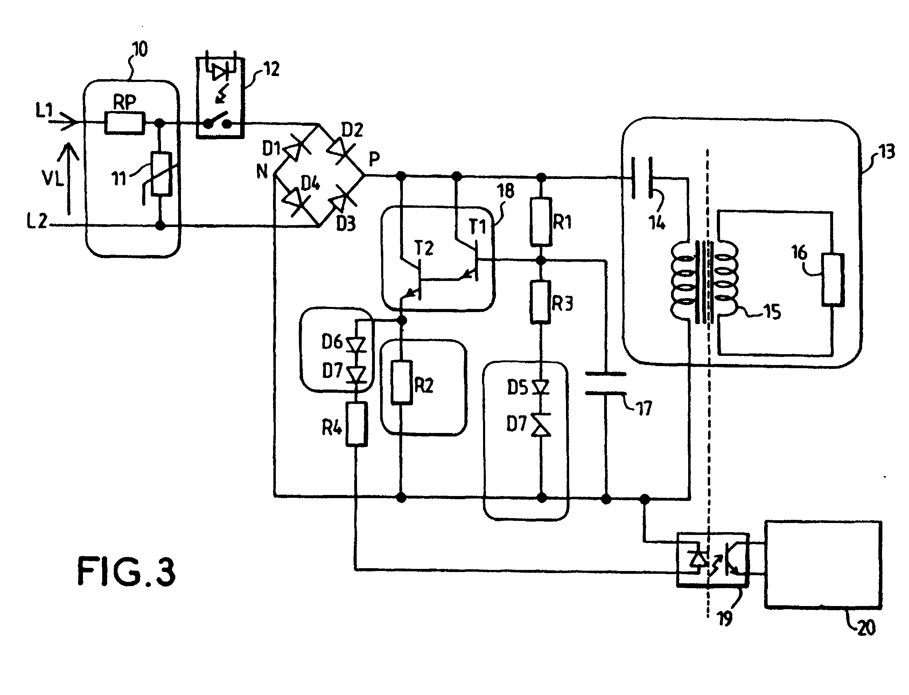

La figure 3 est un schéma électrique du dispositif conforme au présent exemple de réalisation. Le dispositif comporte un circuit de protection 10 contre les surtensions, composé d'une résistance RP en série avec l'un des conducteurs L1 ou L2, ainsi que d'une résistance 11 variant en fonction de la tension appliquée et placée en parallèle sur les deux conducteurs, après RP. On rappelle que la tension d'entrée du dispositif est VL.
Un relais MOS d'une résistance RO à l'état fermé est placé en série avec RP, après la résistance 11. Les deux conducteurs alimentent un pont redresseur composé de quatre diodes D1 à D4. La sortie du relais MOS 12 est connectée entre les diodes D1 et D2, le conducteur L2 étant connecté entre les diodes D3 et D4. Les connexions entre les diodes D2 et D3, respectivement D1 et D4 représentent les sorties "positive" P et "neutre" N du redresseur.
Les sorties du pont redresseur sont connectées à un circuit de traitement audio 13. Ce circuit 13 comporte un condensateur de découplage 14 de la composante continue relié en série entre le point P et le primaire d'un transformateur. Le primaire est également relié à la au point N. La charge du secondaire du tranformateur est représentée par une impédance de charge 16.
Les collecteurs de deux transistors T1 et T2 montés en Darlington (18) sont également connectés au point P. La base du transistor T1 est reliée au point milieu d'un pont de résistances formé par une résistance R1 connectée au point P et une résistance R3 connectée au point N à travers une diode D5 en série avec une diode Zenner DZ. Le Darlington peut être remplacé par un autre type d'amplificateur à gain suffisant.
La sortie du Darlington, en l'occurrence l'émetteur du transistor T2 est reliée au point N d'une part à travers une résistance R2, d'autre part à travers, en série, deux diodes D6 et D7, une résistance R4 et la diode émettrice d'un optocoupleur 19. Le point milieu du pont de résistances R1 et R3 est également connecté au point N à travers une capacité 17. Le rôle de cette capacité est de filtrer les fréquences correspondant aux signaux audio, de façon à éviter que ce signal ne perturbe le courant dans R2.

Une fonction du dispositif est de créer une caractéristique en continu répondant aux critères définis ci-dessus. Selon le présent exemple, la caractéristique est composée sensiblement de deux segments de droite A et B qui se rejoignent au niveau d'un coude C.
Deux tensions de référence sont utilisées par le circuit. La première, Vref1 est déterminée par la diode D5 et la diode Zener. Vref1 est choisi pour être située environ à 8,6 V par rapport à la référence de tension de VL. La diode D5 possède un comportement en fonction de la température proche de celui du Darlington et augmente l'invariance des caractéristiques du circuit en fonction de la température. La seconde référence, Vref2, est déterminée par les deux diodes D6 et D7. Elle est mise en oeuvre pour la détection de décrochage.

Dans un premier temps, on se situe dans le cas où la tension de 8,6 V n'est pas atteinte par VL: la diode D5 et la diode Zener ne conduisent pas. Dans ce cas, on peut montrer que la pente A de la caractéristique est sensiblement égale à Rp+RO+R2, l'influence de R1 étant rendue négligeable par le grand gain du Darlington. En prenant Rp=10 Ohm, RO=30 Ohm et R2=270 Ohm on obtient une pente A de 1/310 Ohm^-1. La pente A est donc facilement réglable par une modification de la résistance R2.
Deux diodes du pont redresseur ainsi que les deux jonctions émetteur-base de T1 et de T2 introduisent une tension de décalage Vs dans le circuit. Cette tension explique que le segment de droite de pente A ne parte pas de l'origine du graphe de la figure 2, mais soit légèrement décalé. Si l'on considère que chaque diode et chaque jonction représente une tension de 0,6 V, alors Vs est sensiblement égal à 2,4 V.

Lorsque VL dépasse 8,6 V, D5 et la diode Zener conduisent. On peut montrer dans ce cas que la pente du segment B est donnée approximativement par la relation: R2*(R1 +R3)/R3. En prenant comme valeurs numériques R1=12 kOhm et R3=2,7 kOhm, on obtient une pente de 1/1470 Ohm^-1.

Le courant dans l'émetteur de T2 est sensiblement égal en valeur absolue au courant continu dans RP. La tension aux bornes de la résistance R2 donne une image adéquate de ce courant. Les diodes D6 et D7 et la résistance R4 dérivent une partie de ce courant vers l'optocoupleur 19. La tension de référence créée par D6 et D7 ainsi que la valeur de R4 (2,7 kOhm selon le présent exemple) calibrent le courant passant par la diode de l'optocoupleur 19. Le phototransistor de cet optocoupleur est relié à un circuit 20 de détermination de la valeur de la composante continue du courant. La valeur ainsi obtenue est comparée à une plage de valeurs située autour du point de fonctionnement X de la figure 2. Lorsque la valeur mesurée du courant se situe en dehors de cette plage, il y a détection d'un poste en fonctionnement branché sur la ligne téléphonique.
La valeur de l'intensité de courant au point de fonctionnement X est stockée dans une mémoire du circuit 20. Ce dernier comprend également un microprocesseur ainsi qu'un convertisseur analogique numérique réalisant la conversion de l'information fournie par l'optocoupleur en une donnée interprétable par le microprocesseur. Selon le présent exemple de réalisation, une variation de l'ordre de grandeur de quelques mA autour de cette valeur détermine la plage précitée.
Selon un mode de réalisation particulier, ladite valeur de l'intensité du courant au point de fonctionnement est reprogrammée automatiquement par le circuit 20 de temps en temps, par exemple à chaque prise de ligne réussie. Cette variante permet de tenir compte du vieillissement de certains composants, notamment l'optocoupleur.
Le circuit de détection est mis en oeuvre lors de différentes occasions:
Dans un premier temps, lorsque l'appareil incluant le modem doit prendre la ligne, le modem est mis en fonctionnement pendant un court instant, le temps de stabiliser le courant à l'intérieur du circuit et de déterminer la valeur de la composante continue du courant. De cette façon, il est possible de vérifier l'occupation de la ligne.
Dans un second temps, la détermination de la composante continue est effectuée de manière périodique lorsqu'une transmission de données est en cours. S'il y a détection d'un autre appareil en fonctionnement lors de cette transmission, cette dernière est interrompue pour donner priorité à l'appareil détecté. La transmission est reprise après un temps d'attente.
La périodicité de la détermination de la composante continue est destinée à éviter une utilisation trop importante du microprocesseur du circuit 20, qui peut être utilisé pour d'autres tâches.

Selon une variante de réalisation, le circuit 20 comprend un circuit de dérivation du courant fourni par l'optocoupleur. Une variation du courant déclenche alors l'arrêt d'une transmission de données par la création d'une interruption au niveau d'un microprocesseur contrôlant le modem. Dans ce cas, le dispositif n'est utilisé que pour une détection du décrochage d'un autre appareil pendant une communication.

Il est à noter que plus la caractéristique du modem se rapproche du gabarit, plus elle doit être insensible aux variations de température. Selon un mode de réalisation particulier, pour éviter une sortie du gabarit, on prévoit une distance de sécurité entre les limites du gabarit et la caractéristique du modem.

L'exemple de réalisation décrit concerne un appareil incluant un modem et transmettant des données modulées par le réseau RTC. Il est bien évident que l'invention ne se limite pas à cet exemple, tout appareil relié au réseau RTC ou un réseau ayant des propriétés similaires peut être être modifié par l'homme du métier pour mettre en oeuvre l'invention.

Selon l'exemple donné, le point de fonctionnement en continu du modem est choisi pour être situé dans une zone du gabarit où la composante continue du courant ne peut pas être nulle, ceci pour éviter la non-détection d'un appareil présentant effectivement une composante continue nulle. Selon une variante de réalisation, on évite également les zones du gabarit où la composante continue du courant d'un appareil autre que le modem peut être assez faible pour ne pas être induire une variation de courant détectable par le modem.

Le gabarit en composantes continues de la figure 2 est le gabarit valable en France. Néanmoins, l'invention ne se limite pas à ce gabarit particulier.

## Revendications

1. Dispositif de communication connecté en parallèle avec au moins un appareil de communication sur une ligne téléphonique (L1, L2), ledit dispositif et ledit appareil étant conformes à un gabarit en composantes continues donné,
ledit dispositif étant **caractérisé en ce qu'**il comprend:
des moyens (18, R1, R2, R3, D5, DZ) plaçant le point de fonctionnement (X) en composante continue dudit dispositif seul en dehors des zones dudit gabarit où la composante continue du courant peut être nulle,
des moyens de détermination (R2, D6, D7, R4, 19, 20) de la composante continue du courant circulant dans ledit dispositif,
des moyens de détection (20) d'une variation de ladite composante continue de courant.

2. Dispositif selon la revendication 1, **caractérisé en ce que** lesdits moyens de placement du point de fonctionnement comprennent des moyens (18, R1, R2, R3, D5, DZ) de génération d'une caractéristique en composantes continues telle qu'elle possède des intersections (X) avec les caractéristiques de charge possibles de la ligne de transmission situées dans des zones dudit gabarit où la composante continue de courant ne peut être nulle.

3. Dispositif selon la revendication 2, **caractérisé en ce que** ladite caractéristique en composantes continues comprend un point d'intersection (C) avec la caractéristique de charge de 1400 Ohms, ledit point (X) étant situé au delà de 8,6 V.

4. Dispositif selon l'une des revendications 2 ou 3, **caractérisé en ce que** ledit gabarit comportant une limite maximale de courant, la caractéristique dudit dispositif comporte une pente maximale dans la zone délimitée par les caractéristiques de charge et ladite limite maximale, ladite caractéristique ayant un point commun avec chaque caractéristique de charge possible.

5. Dispositif selon l'une des revendications précédentes, **caractérisé en ce que** lesdits moyens (20) de détection d'une variation de ladite composante continue comprennent un circuit réalisant la dérivée du signal correspondant à ladite composante continue déterminée.

6. Dispositif selon l'une des revendications précédentes, **caractérisé en ce que** lesdits moyens (20) de détection d'une variation de ladite composante continue comprennent des moyens de comparaison de ladite composante continue déterminée et de la composante continue au point de fonctionnement (X) dudit dispositif seul.

7. Dispositif selon l'une des revendications précédentes, **caractérisé en ce qu'**il comprend un pont redresseur (D1, D2, D3, D4) de la tension de la ligne intercalé entre la ligne de transmission (L1, L2) et un circuit de traitement de signaux audio (13).

8. Dispositif selon la revendication , **caractérisé en ce que** la sortie positive (P) du pont redresseur étant connectée aux collecteurs d'un premier et deuxième transistors (T1, T2) montés en amplificateur (18), ladite sortie positive (P) étant reliée à la base du premier transistor (T1) à travers une première résistance (R1), ledit amplificateur (18) débite dans une seconde résistance (R2) reliée à la sortie neutre (N) dudit pont redresseur.

9. Dispositif selon la revendication 6, **caractérisé en ce qu'**il comprend en outre une capacité (17) reliant la base du premier transistor (T1) à la sortie neutre (N) du pont redresseur.

10. Dispositif selon l'une des revendications 8 ou 9, **caractérisé en ce qu'**il comprend en outre en série entre l'entrée de l'amplificateur et la sortie neutre (N) du pont redresseur une troisième résistance (R3), un moyen d'interruption et un premier générateur de tension de référence (DZ, D5), ledit moyen d'interruption se fermant lorsque la tension ligne dépasse une valeur donnée.

11. Dispositif selon la revendication 10, **caractérisé en ce que** ledit moyen d'interruption et ladite source de tension comprennent une diode Zener (DZ).

12. Dispositif selon l'une des revendications 8 à 11, **caractérisé en ce que** lesdits moyens de détermination de la composante continue mesurent la tension aux bornes de la seconde résistance (R2).

13. Dispositif selon l'une des revendications 8 à 12, **caractérisé en ce que** lesdits moyens de détermination de la composante continue (R2, D6, D7, R4) dérivent une partie du courant en sortie de l'amplificateur (18) vers un circuit de mesure de courant (19, 20).

14. Dispositif selon la revendication 13, **caractérisé en ce que** la branche de dérivation de courant comprend en série un second générateur de tension de référence (D6, D7) et une quatrième résistance (R4).

15. Dispositif selon la revendication 13, **caractérisé en ce que** lesdits moyens de détection (20) réalisent une comparaison entre la valeur de la composante continue mesurée par ledit circuit de mesure de courant (19, 20) et la valeur de la composante continue au point de fonctionnement (X) dudit dispositif.

16. Dispositif selon la revendication 15, **caractérisé en ce que** ladite comparaison est réalisée par rapport à une plage autour de la valeur de la composante continue au point de fonctionnement (X) dudit dispositif.

17. Dispositif selon la revendication 16, **caractérisé en ce que** ledit circuit de détermination comprend un microprocesseur connecté à un convertisseur numérique analogique et à une mémoire dans laquelle est stockée la valeur de la composante continue au point de fonctionnement, ledit convertisseur numérique analogique étant relié aux bornes d'une résistance couplée à la branche de dérivation à travers un opto-coupleur (19).

## Patentansprüche

1. Kommunikationsvorrichtung, die parallel mit wenigstens einem Kommunikationsgerät über eine Telefonleitung (L1, L2) verbunden ist, wobei die Vorrichtung und das Gerät einer bestimmten Form der Gleichstromkomponenten entsprechen,
**gekennzeichnet durch**
Mittel (18, R1, R2, R3, D5, DZ), die den Arbeitspunkt (X) der Vorrichtung für die Gleichstromkomponente allein außerhalb der Bereiche der Form einstellen, wo die Gleichstromkomponente null sein kann,
Mittel (R2, D6, D7, R4, 19, 20) zur Ermittlung der Gleichstromkomponente des in der Vorrichtung fließenden Stroms,
Mittel (20) zur Erfassung einer Änderung der Gleichstromkomponente des Stroms.

2. Vorrichtung nach Anspruch 1, **dadurch gekennzeichnet, dass** die Mittel zur Einstellung des Arbeitspunktes Mittel (18, R1, R2, R3, D5, DZ) zur Erzeugung einer Kennlinie für die Gleichstromkomponenten enthalten, derart, dass diese Schnittpunkte (X) mit den möglichen Belastungskennlinien der Übertragungsleitung enthalten, die in Bereichen der Form liegen, wo die Gleichstromkomponente nicht null sein kann.

3. Vorrichtung nach Anspruch 2, **dadurch gekennzeichnet, dass** die Kennlinie für die Gleichstromkomponenten einen Schnittpunkt (C) mit der Belastungskennlinie von 1400 Ohm enthält und der Punkt (X) oberhalb von 8,6 V liegt.

4. Vorrichtung nach einem der Ansprüche 2 oder 3, **dadurch gekennzeichnet, dass** die Form eine maximale Stromgrenze enthält, dass die Kennlinie der Vorrichtung eine maximale Steigung in dem begrenzten Bereich durch die Belastungskennlinien und die Maximalgrenze aufweist und dass die Kennlinie einen Punkt aufweist, der gemeinsam ist mit jeder möglichen Belastungskennlinie.

5. Vorrichtung nach einem der vorangehenden Ansprüche, **dadurch gekennzeichnet, dass** die Mittel (20) zur Erfassung einer Änderung der Gleichstromkomponente eine Schaltung enthalten, die die Ableitung des Signals bewirkt, das der bestimmten Gleichstromkomponente entspricht.

6. Vorrichtung nach einem der vorangehenden Ansprüche, **dadurch gekennzeichnet, dass** die Mittel (20) zur Erfassung einer Änderung der Gleichstromkomponente Mittel zum Vergleich der bestimmten Gleichstromkomponente und der Gleichstromkomponente bei dem Arbeitspunkt (X) der Vorrichtung allein enthalten.

7. Vorrichtung nach einem der vorangehenden Ansprüche, **dadurch gekennzeichnet, dass** sie eine Gleichrichterbrücke (D1, D2, D3, D4) für die Spannung der Leitung zwischen der Übertragungsleitung (L1, L2) und einer Audiosignal-Verarbeitungsschaltung (13) enthält.

8. Vorrichtung nach dem Anspruch, **dadurch gekennzeichnet, dass** der positive Ausgang (P) der Gleichrichterbrücke mit den Kollektoren eines ersten und zweiten Transistors (T1, T2) verbunden ist, die als Verstärker (18) geschaltet sind, dass der positive Ausgang (P) mit der Basis des ersten Transistors (T1) über einen ersten Widerstand (R1) verbunden ist, dass der Verstärker (18) einen zweiten Widerstand (R2) speist, der mit dem neutralen Ausgang (N) der Gleichrichterbrücke verbunden ist.

9. Vorrichtung nach Anspruch 6, **dadurch gekennzeichnet, dass** sie außerdem eine Kapazität (17) enthält, die die Basis des ersten Transistors (T1) mit dem neutralen Ausgang (N) der Gleichrichterbrücke verbindet.

10. Vorrichtung nach einem der Ansprüche 8 oder 9, **dadurch gekennzeichnet, dass** sie außerdem in Reihe zwischen dem Eingang des Verstärkers und dem neutralen Ausgang (N) der Gleichrichterbrücke einen dritten Widerstand (R3), Schaltmittel und einen ersten Referenzspannungsgenerator (DZ, D5) enthält und die Schaltmittel geschlossen werden, wenn die Leitungsspannung einen bestimmten Wert übersteigt.

11. Vorrichtung nach Anspruch 10, **dadurch gekennzeichnet, dass** die Schaltmittel und die Spannungsquelle eine Zenerdiode (DZ) enthalten.

12. Vorrichtung nach einem der Ansprüche 8 bis 11, **dadurch gekennzeichnet, dass** die Mittel zur Bestimmung der Gleichstromkomponente die Spannung an den Anschlüssen des zweiten Widerstands (R2) messen.

13. Vorrichtung nach einem der Ansprüche 8 bis 12, **dadurch gekennzeichnet, dass** die Mittel zur Bestimmung der Gleichstromkomponente (R2, D6, D7, R4) einen Teil des Stroms am Ausgang des Verstärkers (18) zu einer Strommeßschaltung (19, 20) ableiten.

14. Vorrichtung nach Anspruch 13, **dadurch gekennzeichnet, dass** der Zweig zur Ableitung des Stroms in Reihe einen zweiten Referenzspannungsgenerator (D6, D7) und einen vierten Widerstand (R4) enthält.

15. Vorrichtung nach Anspruch 13, **dadurch gekennzeichnet, dass** die Mittel zur Erfassung (20) einen Vergleich zwischen dem Wert der Gleichstromkomponente, die durch die Strommeßschaltung gemessen wird, und dem Wert der Gleichstromkomponente beim Arbeitspunkt der Vorrichtung bewirken.

16. Vorrichtung nach Anspruch 15, **dadurch gekennzeichnet, dass** der Vergleich für einen Bereich um den Wert der Gleichstromkomponente bei dem Arbeitspunkt (X) der Vorrichtung erfolgt.

17. Vorrichtung nach Anspruch 16, **dadurch gekennzeichnet, dass** die Schaltung zur Ermittlung einen Microprocessor enthält, der mit einem Digital/Analog-Converter und einem Speicher verbunden ist, in dem der Wert der Gleichstromkomponente beim Arbeitspunkt gespeichert wird, und dass der Digital/Analog-Converter mit den Anschlüssen eines Widerstands verbunden ist, der mit dem Zweig für die Ableitung über einen Optokoppler (19) verbunden ist.

## Claims

1. Communications device connected in parallel with at least one item of communications apparatus on a telephone line (L1, L2), the said device and the said apparatus conforming to a given template in terms of DC components,
the said device being **characterized in that** it comprises:
means (18, R1, R2, R3, D5, DZ) setting the operating point (X) of the said device alone, in terms of DC component, outside regions of the said template where the DC component of the current may be zero,
means (R2, D6, D7, R4, 19, 20) of determining the DC component of the current flowing in the said device,
means (20) of detecting a variation in the said DC current component.

2. Device according to Claim 1, **characterized in that** the said means of setting the operating point comprise means (18, R1, R2, R3, D5, DZ) of generating a characteristic, in terms of DC components, such that it possesses intersections (X) with the possible load characteristics of the transmission line which are situated in regions of the said template where the DC current component cannot be zero.

3. Device according to Claim 2, **characterized in that** the said characteristic in terms of DC components comprises a point of intersection (C) with the 1400 ohm load characteristic, the said point (X) being situated beyond 8.6 V.

4. Device according to either of Claims 2 and 3, **characterized in that**, with the said template including a maximum current limit, the characteristic of the said device includes a maximum slope in the region bounded by the load characteristics and the said maximum limit, the said characteristic having a point which is common with each possible load characteristic.

5. Device according to one of the preceding claims, **characterized in that** the said means (20) of detecting a variation in the said DC component comprise a circuit forming the derivative of the signal corresponding to the said defined DC component.

6. Device according to one of the preceding claims, **characterized in that** the said means (20) of detecting a variation in the said DC component comprise means of comparing the said defined DC component and the DC component at the operating point (X) of the said device alone.

7. Device according to one of the preceding claims, **characterized in that** it comprises a bridge (D1, D2, D3, D4) rectifying the voltage of the line interposed between the transmission line (L1, L2) and an audio signal processing circuit (13).

8. Device according to Claim 7, **characterized in that**, with the positive output (P) of the rectifier bridge being connected to the collectors of a first and second transistor (T1, T2) mounted as an amplifier (18), the said positive output (P) being linked to the base of the first transistor (T1) through a first resistor (R1), the said amplifier (18) feeds into a second resistor (R2) linked to the neutral output (N) of the said rectifier bridge.

9. Device according to Claim 6, **characterized in that** it further comprises a capacitor (17) linking the base of the first transistor (T1) to the neutral output (N) of the rectifier bridge.

10. Device according to either of Claims 8 and 9, **characterized in that** it further comprises, in series between the input of the amplifier and the neutral output (N) of the rectifier bridge, a third resistor (R3), an on/off means and a first reference voltage generator (DZ, D5), the said on/off means being closed when the line voltage exceeds a given value.

11. Device according to Claim 10, **characterized in that** the said on/off means and the said voltage source comprise a Zener diode (DZ).

12. Device according to one of Claims 8 to 11, **characterized in that** the said means of determining the DC component measure the voltage at the terminals of the second resistor (R2).

13. Device according to one of Claims 8 to 12, **characterized in that** the said means for determining the DC component (R2, D6, D7, R4) tap off some of the current at the output of the amplifier (18) towards a current-measuring circuit (19, 20).

14. Device according to Claim 13, **characterized in that** the current-tapping branch comprises, in series, a second reference voltage generator (D6, D7) and a fourth resistor (R4).

15. Device according to Claim 13, **characterized in that** the said detection means (20) carry out a comparison between the value of the DC component measured by the said current measuring circuit (19, 20) and the value of the DC component at the operating point (X) of the said device.

16. Device according to Claim 15, **characterized in that** the said comparison is carried out with respect to a range around the value of the DC component at the operating point (X) of the said device.

17. Device according to Claim 16, **characterized in that** the said determination circuit comprises a microprocessor connected to a digital-analog converter and to a memory in which is stored the value of the DC component at the operating point, the said digital-analog converter being linked to the terminals of a resistor connected to the tapping-off branch via an optocoupler (19).
